(19) Europäisches Patentamt / European Patent Office / Office européen des brevets

(11) **EP 3 529 629 B1**

(12) **EUROPEAN PATENT SPECIFICATION**

(45) Date of publication and mention
of the grant of the patent:
**29.11.2023  Bulletin 2023/48**

(21) Application number: **17862381.5**

(22) Date of filing: **20.10.2017**

(51) International Patent Classification (IPC):
**G06T 7/80** *(2017.01)*        **G01S 7/48** *(2006.01)*
**G01S 17/00** *(2020.01)*

(52) Cooperative Patent Classification (CPC):
**G06T 7/80; G01C 11/04; G01C 25/00;**
G06T 2207/10032; G06T 2207/30181

(86) International application number:
**PCT/AU2017/051139**

(87) International publication number:
**WO 2018/071979 (26.04.2018 Gazette 2018/17)**

(54) **AN AERIAL CAMERA BORESIGHT CALIBRATION SYSTEM**

PEILRICHTUNGSKALIBRIERUNGSSYSTEM FÜR LUFTBILDKAMERA

SYSTÈME D'ÉTALONNAGE DE POINTAGE DE CAMÉRA AÉRIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2016  AU 2016904254**

(43) Date of publication of application:
**28.08.2019  Bulletin 2019/35**

(73) Proprietor: **Spookfish Innovations Pty Ltd.
Bentley, Western Australia 6102 (AU)**

(72) Inventor: **COPE, Simon
Burswood, Western Australia 6100 (AU)**

(74) Representative: **Murgitroyd & Company
Murgitroyd House
165-169 Scotland Street
Glasgow G5 8PL (GB)**

(56) References cited:
**WO-A1-2016/054681**

• **CHU CHIEN-HSUN ET AL: "The DG Performance
Verifications of UAV Borne MMS Payload with
Two Tactical Grade Low Cost MEMS IMUs Using
New Calibration Method", GNSS 2014 -
PROCEEDINGS OF THE 27TH INTERNATIONAL
TECHNICAL MEETING OF THE SATELLITE
DIVISION OF THE INSTITUTE OF NAVIGATION
(ION GNSS+ 2014), THE INSTITUTE OF
NAVIGATION, 8551 RIXLEW LANE SUITE 360
MANASSAS, VA 20109, USA, 12 September 2014
(2014-09-12), pages 2097-2117, XP056007726,**
• **CRAMER, M ET AL.: 'SYSTEM CALIBRATION
FOR DIRECT GEOREFERENCING'
INTERNATIONAL ARCHIVES ON
PHOTOGRAMMETRY AND REMOTESENSING
IAPRS vol. XXXIV, September 2002, pages 79 - 84,
XP055477044**
• **IP, A. ET AL.: 'System Performance Analysis of
INS/DGPS integrated System for Mobile Mapping
System (MMS' PROCEEDING OF THE 4TH
INTERNATIONAL SYMPOSIUM ON MOBILE
MAPPING TECHNOLOGY 29 March 2004,
KUNMING, CHINA, pages 1 - 10, XP055477047**
• **AIWU ZHANG ET AL.: 'Toward High Altitude
Airship Ground-Based Boresight Calibration of
Hyperspectral Pushbroom Imaging Sensors'
REMOTE SENS vol. 7, no. 12, 2015, pages 17297
- 17311, XP055477050**

EP 3 529 629 B1

**Description**

Field of the Invention

The present invention relates to an aerial camera boresight calibration system for use in an aerial survey.

Background of the Invention

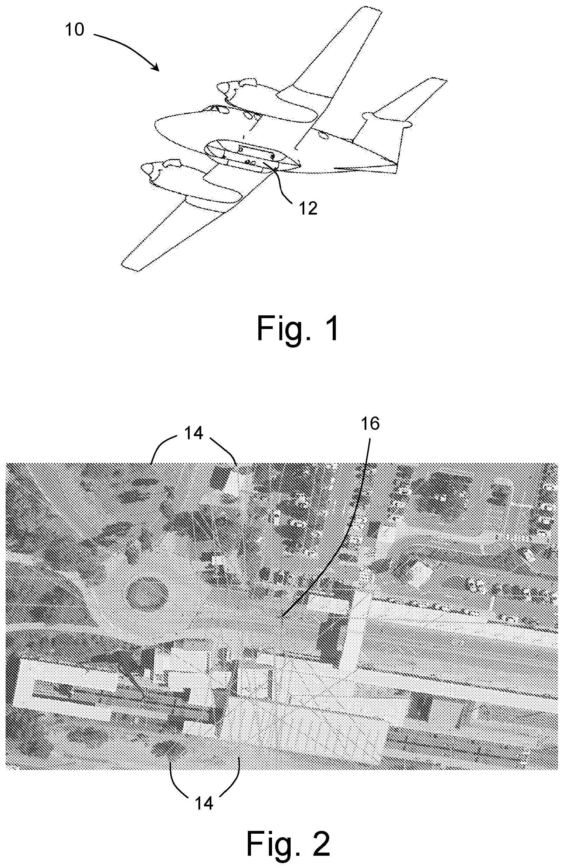

It is known to provide an aerial camera system that is arranged to capture ground images from a survey aircraft. Typically, as shown in Figure 1, the aerial camera system 12 is mounted to an underside portion of the survey aircraft 10 and ground images are captured as the survey aircraft 10 moves along defined flight lines. The system is arranged to capture multiple images for each ground feature, which enables a photogrammetric solution, typically a bundle adjustment process, to be applied to the captured images in order to determine a best case solution for interior and exterior orientation information associated with each camera used and the images captured by each camera. The solution produced by the bundle adjustment process may then be used to produce nadir and/or oblique photomaps.

In order to improve the photogrammetric solution produced by the bundle adjustment process, the number of images taken for each ground feature must be increased, and typically this is achieved by capturing images more frequently so that the overlap between successively captured images is increased, and by ensuring that sufficient overlap exists between adjacent flight lines.

Productivity in relation to the ground area captured per hour at a defined resolution can potentially be increased by flying faster, flying higher and/or using a wider field of view (FoV).

However, such techniques typically cause image blur.

Therefore, in order to improve image resolution, motion compensation techniques are employed, for example as described in applicants co-pending International Patent Application No. PCT/AU2015/000606.

A typical survey aircraft includes one or more cameras for capturing images, and an Inertial Navigation System (INS) that is used to determine the movement, position and orientation of the survey aircraft and thereby the position and pose of the camera(s), typically using a GPS and an Inertial Measurement Unit (IMU) that uses accelerometers and gyroscopes for each spatial axis.

Boresight calibration is a process of determining the parameters that describe the static misalignment between the IMU derived pose and the actual camera optical center, which occurs due to a combination of manufacturing and assembly tolerances. The calibration parameters comprise $x, y,$ and $z$ axis rotation values that are used to bring the camera system and the IMU into closer alignment so that the line of sight (also referred to as exterior orientation for each image) determined using the IMU is as close as practical to the actual line of sight of the camera(s).

While the angular errors between the rotational values determined using the IMU and the actual camera rotational values may be numerically small, a 0.1 degree pointing error between them results in a significant 4.36m positional error from 2,500m away. This is a significant issue for high-altitude image capture systems.

Although it is possible to resolve these errors as part of the bundle adjustment process, the significant errors between the IMU determined rotational values and the actual camera rotational values causes the process to be cumbersome and time consuming.

The combined $x, y,$ and $z$ misalignment in this example results in an initial solution with residual Root Mean Square (RMS) errors of over 15m. This level of misalignment makes automated aerial triangulation (AT) processing in a bundle adjustment process very slow as the search range needs to be made very large to find matching feature observations across multiple overlapping images.

A typical arrangement for determining boresight calibration parameters for a camera system is to setup a special test field, or perform dedicated calibration flights, but such arrangements are time consuming, expensive and operationally limiting.

For aerial camera systems that include scanning-type cameras, the problem is exacerbated because the required boresight calibration parameters are unlikely to be constant across the entire range of motion - either Field of Regard (FoR) scanning range or Motion Compensation (MC) range. This is because multiple misalignments in rotating components can create multiple, potentially eccentric, misalignments.

In Figure 2, epipolar lines 14 of feature observations for a common control point 16 when modelled with a single static boresight calibration show the effect of such misalignments on the reprojection accuracy in a scanning camera system.

CHU CHIEN-HSUN ET AL "The DG Performance Verifications of UAV Borne MMS Payload with Two Tactical Grade Low Cost MEMS IMUs using new calibration method" GNSS 2014, Proc. 27th International Technical Meeting of the Satellite Division of the Institute of Navigation, XP056007726 discloses a study regarding the accuracy of direct georeferencing. WO2016054681 A1 discloses an aerial camera system.

## Summary of the Invention

It will be understood that as the accuracy of the initial boresight alignment increases, the speed and robustness of the bundle adjustment solution will also increase and, therefore, by determining more accurate boresight calibration parameters for a given camera system, it is possible to improve the speed and efficiency of the bundle adjustment process.

In a first aspect of the present invention, there is provided a computer-implemented method of calibrating line of sight data of an imaging system disposed on an aircraft, according to claim 1.

In a second aspect of the present invention, there is provided a boresight calibration system, according to claim 8.

Further aspects of the present invention are provided by the dependent claims.

## Brief Description of the Drawings

The present invention will now be described, by way of example only, with reference to the accompanying drawings, in which:

Figure 1 is a diagrammatic representation of a survey aircraft incorporating an aerial camera system;

Figure 2 shows epipolar lines of feature observations for a common control point in a conventional aerial survey with a single static boresight calibration arrangement;

Figure 3 is a diagrammatic perspective view of a camera assembly of an aerial camera system, the camera assembly including a stabilisation assembly;

Figure 4 is a block diagram illustrating operative components of an aerial camera boresight calibration system in accordance with an embodiment of the present invention;

Figure 5 is a flow diagram illustrating a method of determining boresight calibration parameters according to an embodiment of the present invention;

Figure 6 is a flow diagram illustrating a method of calibrating boresight in an aerial camera system using lookup tables;

Figure 7 is a flow diagram illustrating a method of calibrating boresight in an aerial camera system using polynomial;

Figure 8 is a graph illustrating a relationship between tube rotation in a rotating tube-type camera assembly of an aerial camera system and an $x$ axis calibration parameter for a defined camera line of sight and therefore captured image; and

Figure 9 shows epipolar lines of feature observations for a common control point in an aerial survey that uses an aerial camera boresight calibration system in accordance with an embodiment of the present invention.

## Description of an Embodiment of the Invention

Referring to Figure 1 of the drawings, a survey aircraft 10 with mounted aerial camera system 12 is shown.

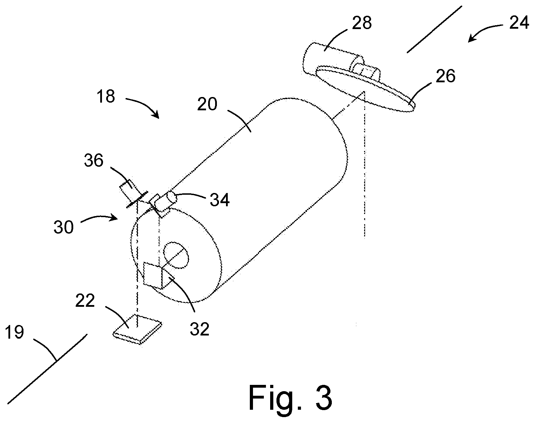

As shown in Figure 3, the aerial camera system 12 is of a type described in applicants co-pending International Patent Application No. PCT/AU2015/000606.

The aerial camera system 12 in this example includes a camera assembly 18 arranged to rotate about a central longitudinal axis 19. The camera assembly 18 includes a lens assembly 20, a sensor assembly 22 and a steering mirror assembly 24. The steering mirror assembly 24 is mounted so as to be positioned at a nominal down angle of about 45° so that light from the ground directly beneath the survey aircraft 10 is directed towards the lens assembly 20 and is in turn focused by the lens assembly 20 onto the sensor assembly 22.

In this example, each sensor in the sensor assembly 22 has a resolution of about 5μm, pixel dimensions of about 5000x3883 and is capable of capturing about 10 frames per second, although it will be understood that other sensor variations are envisaged. The sensor may be a CMOS sensor with LCD shutter and in this example 2 sensors may be provided in the sensor assembly 22.

In this example, the lens assembly 20 has a focal length of about 376mm, although other focal lengths are envisaged, such as 1800mm.

The steering mirror assembly 24 in this example includes a steering mirror 26 and a steering actuator 28 arranged to controllably rotate the steering mirror 26 about a generally transverse axis. The steering actuator 28 may include a rotary piezo-electric mechanism.

The steering mirror assembly 24 operates so as to rotate the steering mirror 26 at a rate corresponding to the instantaneous speed of the survey aircraft 10 and in this way provides a degree of compensation for image blur caused by forward movement of the survey aircraft 10. This is achieved by effecting partial rotation of the steering mirror 26 in a direction so as to at least partially compensate for blur caused by forward motion of the survey aircraft 10, followed by rapid rotational movement of the steering mirror 26 in an opposite rotational direction to bring the steering mirror 26 back to a start position.

It will be understood that as the aircraft moves forwards, a plurality of images are captured 'across track', that is, in a direction perpendicular to the direction of movement of the survey aircraft 10, by rotating the camera assembly 18 about the central axis 19, capturing images periodically as the camera assembly 18 rotates, and repeatedly moving the camera assembly 18 back to a start rotational position.

While scanning the camera assembly 18 in this way enables multiple images to be captured at relatively low field of view with a lens of relatively high focal length and thereby relatively high resolution, rotating the camera assembly 18 causes significant image blur.

Image blur is also affected by movement of the survey aircraft 10, including instantaneous roll of the survey aircraft 10.

In order to at least partially compensate for image blur, the camera assembly 18 also includes a stabilisation assembly 30 including a primary folding mirror 32 that receives light from the lens assembly 20 and reflects the light at 90° towards a first fast steering mirror 34. The first fast steering mirror 34 reflects the light at approximately 90° towards a second fast steering mirror 36, which then reflects the light at approximately 90° towards the sensor assembly 22.

In this example, each of the first and second fast steering mirrors 34, 36 is a front coated optically flat articulating mirror mounted to an actuator that is capable of rapidly rotating a movable mirror, in this embodiment using a rotary piezo-electric mechanism. By synchronizing rotational movement of the articulating mirrors with rotational movement of the lens assembly 20, it is possible to effectively stabilize an image on the sensor of the sensor assembly 22 and thereby reduce image blur.

The survey aircraft 10 also includes an Inertial Navigation System (INS) having a GPS unit and an Inertial Measurement Unit (IMU). The INS is arranged to determine the movement, position and orientation of the survey aircraft 10 in real time, and this information is used with orientation information associated with the camera assembly 18 to provide information indicative of an estimated camera line of sight for each captured image in terms of $x$, $y$ and $z$ rotational values. The present system determines $x$, $y$ and $z$ calibration parameters to be applied to the estimated boresight information to improve the accuracy of the estimated line of sight data so as to be closer to the actual line of sight of the camera assembly 18.

The camera assembly 18 is arranged such that the field of regard (FoR) is directed generally vertically downwards in order to capture images of the ground directly beneath the survey aircraft 10. In this example, the images are used to produce high resolution ortho imagery with approximately 70% forward and 2% side overlap between frames, and approximately 70% side overlap between the ground coverage footprints of adjacent flight lines.

This arrangement provides a relatively high redundancy for the images captured by the camera assembly 18.

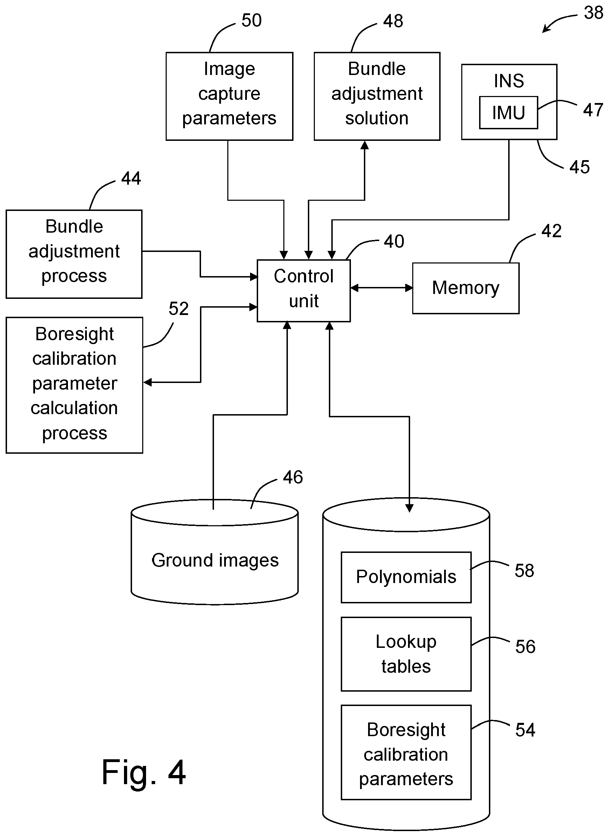

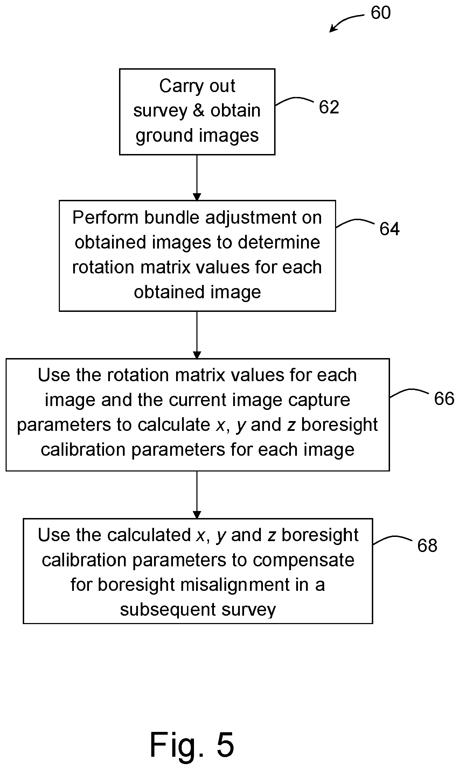

Operative components of an aerial camera boresight calibration system 38 are shown in Figure 4 and a flow diagram 60 including steps 62 to 68 of a process for generating boresight calibration parameters 54 for a particular camera system is shown in Figure 5.

A system 38 according to an embodiment of the present invention is usable to determine boresight calibration parameters 54 from previously captured and bundle adjusted survey images 46, and to apply the boresight calibration parameters 54 to newly captured images prior to or as part of a bundle adjustment process. It will be understood, therefore, that the system 38 in this embodiment is arranged to carry out both a bundle adjustment process and a boresight calibration process. In further examples that do not fall under the scope of the present invention, other arrangements are possible, such as separate systems to carry out these processes.

The system 38 includes a control unit 40 arranged to control and coordinate operations in the system 38, and a memory 42 arranged to load processes implemented by the control unit 40. In this example, the system 38 is implemented using a personal computer and as such the control unit 40 may be implemented using a processor and associated programs. However, it will be understood that any suitable implementation is envisaged.

In order to generate boresight calibration parameters 54 from previously captured and bundle adjusted survey images, a survey is carried out 62 and a bundle adjustment process 44 implemented 64 to produce a bundle adjustment solution 48, for example using bundle adjustment program data from a data storage device. The bundle adjustment process is carried out on captured ground images 46 and associated line of sight data derived from an Inertial Measurement Unit (IMU) 47 on the survey aircraft. It will be understood that this process may be relatively time consuming because significant residual Root Mean Square (RMS) errors may exist with the IMU derived data which will affect automated Aerial Triangulation (AT) processing in the bundle adjustment process.

Using the bundle adjustment solution 48, a distinct set of $x$, $y$ and $z$ boresight calibration parameters is calculated 66 using a boresight parameter calibration process 52 for at least one image capture parameter 50 associated with movable components of the camera system. In an embodiment according to the present invention, the specific image capture parameters 50 include the rotational position of the camera assembly 18, the position of the forward motion compensation stabilisation mirror 26, and/or the positions of the first and second fast steering mirrors 34, 36. In this way, 3 boresight rotational calibration parameters ($x$, $y$ and $z$) are produced for each captured image and associated camera assembly line of sight (boresight). The calculation is based on the following relationship:

$$R_{mat} = CameraBoresight * ImageCaptureParameters * IMUPosition$$

where $R_{mat}$ is the rotation matrix for a captured image in the final bundle adjusted solution, *CameraBoresight* is a calibration parameter that corrects a misalignment between the line of sight determined using the IMU and the actual camera assembly optical line of sight, *ImageCaptureParameters* are the parameters of the image capture arrangement in the survey aircraft that affect the line of sight of the camera assembly, and *IMUPosition* is a rotational position derived from the IMU.

In the following example, a camera assembly is provided that has a rotating camera tube affecting the line of sight of the camera assembly.

With this example, the $R_{mat}$ calculation is:

$$R_{mat} = CameraOrientation * CameraBoresight * TubeRotation * TubeOrientation$$
$$* BodyToNED * NED2World$$

where *CameraOrientation* is the orientation of the camera assembly, *TubeRotation* is the rotational position of the rotatable lens assembly, *TubeOrientation* is the orientation of the rotatable lens assembly, *BodyToNED* is a rotation matrix from the body coordinate frame to the North-East-Down frame, and *NED2World* is a rotation matrix from the North-East-Down frame to the World frame.

Therefore, given a final bundle adjusted $R_{mat}$ for a captured image from a survey, orientation data derived from the IMU, and a tube rotation image capture parameter, it is possible to determine the appropriate boresight calibration parameters for the captured image according to:

$$CameraBoresight = CameraOrientation^{-1} * Rmat * (TubeRotation *$$
$$TubeOrientation * BodyToNED * NEDToWorld)^{-1}$$

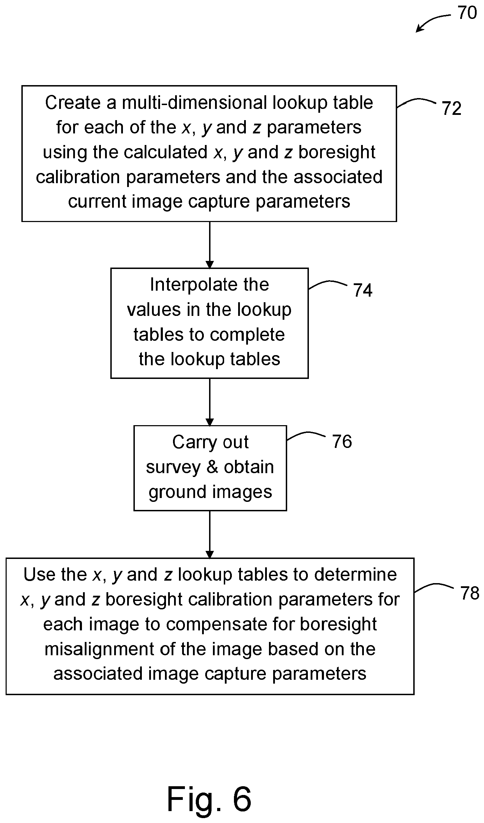

As shown in Figure 6, a flow diagram 70 is shown including steps 72 to 78 of an example process for calibrating line of sight data in an aerial camera system. Using the calculated boresight parameters 54, calibrated line of sight data can be produced for all images in a survey.

The calculated boresight calibration parameters 54 are in this example stored and used to create 72 a multi-dimensional lookup table 56. For example, if the image capture parameters include camera assembly rotation and forward motion compensation mirror position values that continually change during a survey, a 2 dimensional lookup table based on the camera assembly rotation and forward motion compensation mirror position values may be created. A suitable interpolation method such as bicubic interpolation may also be employed to complete the lookup table, if required.

The lookup table 56 can then be used 78 to provide *x, y* and *z* boresight calibration parameters for each captured image during a subsequent bundle adjustment process using the image capture parameters, in this example the camera assembly rotation and forward motion compensation mirror position values for the images.

As a consequence, the speed and efficiency of the bundle adjustment process is much improved because the misalignment for each image between the line of sight determined using the IMU and the actual camera assembly line of sight is reduced.

The above process for producing boresight calibration parameters based on a previous bundle adjusted solution may be repeated, for example periodically, so as to maintain the boresight calibration parameters current and thereby take into account any potential changes that may have occurred to the boresight alignment, for example due to wear of the IMU, vibration induced changes, mechanical shocks, and so on.

In aerial camera systems wherein a small number of movable components exist that affect the line of sight of the camera assembly, alternative arrangements could be used to provide boresight calibration parameters during a subsequent bundle adjustment process.

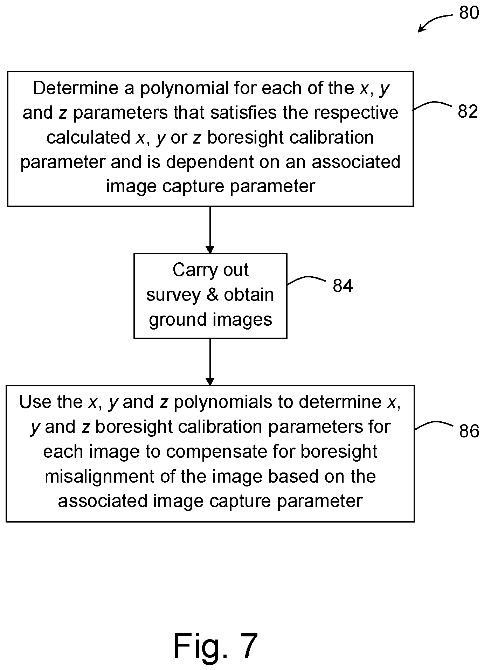

For example, Figure 7 shows a flow diagram 80 including steps 82 to 86 of an alternative example process for calibrating line of sight data in an aerial camera system. Instead of a lookup table, the system 38 calculates 82 a polynomial function for each of the *x, y* and *z* calibration parameters that satisfies a set of calibration parameters calculated according to the flow diagram 60 shown in Figure 5.

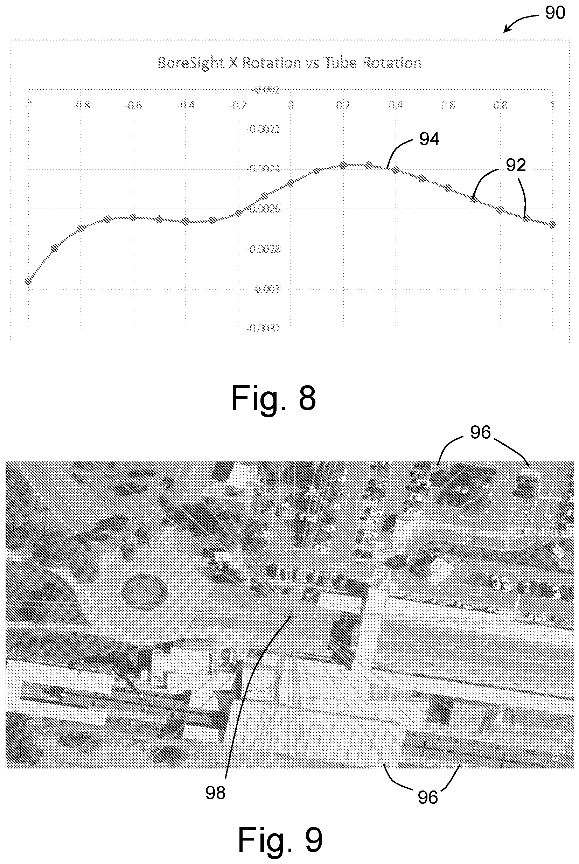

For example, as shown in Figure 8, a plot 90 is shown of calculated *x* axis rotation calibration parameters 92 with respect to camera tube rotation, and a polynomial 94 that satisfies the calibration parameters.

Using the defined polynomials for the *x, y* and *z* rotations, *x, y* and *z* calibration parameters can be determined 86 based on the small number of image capture parameters.

In the present example wherein the image capture parameter is camera tube rotation, a 3rd order polynomial for the *x* axis rotation calibration parameter can be defined according to:

$$X_{rot} = ar^3 + br^2 + cr + d$$

where $X_{rot}$ is the *x* axis rotation calibration parameter; *r* is the camera tube rotation; and *a, b, c* and *d* are constants.

Solving this for the calculated calibration parameters 92 gives:

Positive rotation:

    a=0.00101549346557871
    b=-0.00203326391154181
    c=0.00080941995322413
    d=-0.00247017326964766

Negative Rotation:

    a=-0.00281898194632555
    b=0.00415010191459033
    c=-0.00191215176100009
    d=-0.00238148035772705

Using the present system and method, good boresight calibration can be achieved that is sufficient to enable high-speed, highly robust fully automated aerial triangulation.

It will be understood that the components of the aerial camera boresight calibration system necessary for determining the boresight calibration parameters using a lookup table or polynomials may be disposed on the survey aircraft 10, and calibrated line of sight data stored on the survey aircraft 10 during a survey for subsequent transfer to a land based facility for bundle adjustment processing. Alternatively, non-calibrated line of sight data may be stored at the survey aircraft 10 and subsequently transferred to the land based facility for calibration using the boresight calibration parameters, and bundle adjustment processing.

## Claims

1. A computer-implemented method of calibrating line of sight data of an imaging system (12) disposed on an aircraft (10), the line of sight being an exterior orientation for each image captured by the imaging system, the method comprising:

    calculating boresight calibration parameters (54) for images captured by the imaging system by using:

       orientation data derived from an Inertial Measurement Unit (47);
       line of sight data associated with first images of an existing bundle adjustment solution captured in a first aerial survey;

    the method being **characterized in that**
    the imaging system includes at least one image capture component arranged to move relative to the aircraft during an aerial survey,

       wherein the calculation of the boresight calibration parameters also uses: at least one image capture parameter (50) associated with the first images, the at least one image capture parameter (50) being indicative of respective positions of the at least one movable image capture component of the imaging system (12) when the first images are captured in the first aerial survey,
       wherein, the imaging system is a camera imaging system including a camera assembly (18) arranged to rotate about a central axis (19), with a camera field of view that moves in an oscillating manner across track, with the track corresponding to the direction of movement of the aircraft,
       wherein the at least one image capture parameter (50) includes

a rotational position of the camera assembly (18);
and/or
a position associated with a forward motion compensation component, when the camera imaging system includes at least one forward motion compensation component arranged to compensate for image blur caused by forward movement of the camera imaging system;
and/or
a position associated with an across track motion compensation component, when the camera imaging system includes at least one across track motion compensation component arranged to compensate for image blur caused by across track movement; wherein the method further comprises applying the calculated boresight calibration parameters to line of sight data associated with second images captured in a second aerial survey that have not been bundle adjusted, the calculated boresight calibration parameters applied according to the respective positions of the at least one movable image capture component of the imaging system (12) when the second images are captured in the second aerial survey.

2. A method as claimed in claim 1, wherein each boresight calibration parameter is a calibration parameter associated with a rotational component of line of sight data, for example an *x, y* or *z* rotational component of the line of sight data.

3. A method as claimed in claim 2, wherein the boresight calibration parameters are expressed as a rotational matrix $R_{mat}$ having *x, y* and *z* rotational components.

4. A method as claimed in any one of claims 1 to 3, comprising storing boresight calibration parameters in a lookup table, wherein each entry in the lookup table is associated with at least one image capture parameter and wherein the lookup table is a multi-dimensional lookup table dependent on the number of image capture parameters.

5. A method as claimed in claim 4, comprising determining at least some boresight calibration parameters in the lookup table by interpolation.

6. A method as claimed in any one of claims 1 to 3, comprising determining a polynomial representative of a relationship between a boresight calibration parameter and at least one image capture parameter, and using the polynomial to calculate a boresight calibration parameter using the at least one image capture parameter.

7. A method as claimed in any one of claims 1 to 6, comprising calculating the boresight calibration parameters on the aircraft or storing uncalibrated line of sight data on the aircraft for subsequent transfer to a processing facility, and calculating the boresight calibration parameters at the processing facility.

8. A boresight calibration system (38) to carry out the method of any one of claims 1 to 7.

**Patentansprüche**

1. Computerimplementiertes Verfahren zum Kalibrieren von Sichtliniendaten eines Bildgebungssystems (12), das in einem Flugzeug (10) angeordnet ist, wobei die Sichtlinie eine äußere Ausrichtung für jedes vom Bildgebungssystem erfasste Bild ist,
das Verfahren umfassend:
Berechnen von Peilrichtungskalibrierungsparametern (54) für vom Bildgebungssystem erfasste Bilder unter Verwendung von:

Ausrichtungsdaten, die von einer Inertialmesseinheit (47) abgeleitet sind;
Sichtliniendaten, die ersten Bildern einer vorhandenen Bündelanpassungslösung zugeordnet sind, die in einer ersten Luftbildvermessung erfasst werden;
wobei das Verfahren **dadurch gekennzeichnet ist, dass**:
das Bildgebungssystem mindestens eine Bilderfassungskomponente einschließt, die angeordnet ist, um sich während einer Luftbildvermessung relativ zum Flugzeug zu bewegen, wobei die Berechnung der Peilrichtungskalibrierungsparametern ebenfalls Folgendes verwendet:

mindestens einen Bilderfassungsparameter (50), der den ersten Bildern zugeordnet ist, wobei der mindestens eine Bilderfassungsparameter (50) jeweilige Positionen der mindestens einen beweglichen Bilderfassungskomponente des Bildgebungssystems (12) anzeigt, wenn die ersten Bilder bei der ersten Luftbildvermessung erfasst werden,

wobei das Bildgebungssystem ein Kameraabbildungssystem ist, das eine Kamerabaugruppe (18) einschließt, die angeordnet ist, um sich mit dem Kamerasichtfeld, das sich oszillierend spurübergreifend bewegt, um eine Mittelachse (19) zu drehen,

wobei die Spur der Bewegungsrichtung des Flugzeugs entspricht,

wobei der mindestens eine Bilderfassungsparameter (50) eine Drehposition der Kamerabaugruppe (18) einschließt;

und/oder

eine Position, die einer Vorwärtsbewegungsausgleichskomponente zugeordnet ist, wenn das Kameraabbildungssystem mindestens eine Vorwärtsbewegungsausgleichskomponente einschließt, die angeordnet ist, um Bildunschärfe auszugleichen, die durch Vorwärtsbewegung des Kameraabbildungssystem verursacht wird;

und/oder

eine Position, die einer spurübergreifenden Bewegungsausgleichskomponente zugeordnet ist, wenn das Kameraabbildungssystem mindestens eine spurübergreifende Bewegungsausgleichskomponente einschließt, die angeordnet ist, um Bildunschärfe auszugleichen, die durch spurübergreifende Bewegung verursacht wird;

wobei das Verfahren weiterhin das Anwenden der berechneten Peilrichtungskalibrierungsparameter auf Sichtliniendaten umfasst, die zweiten Bildern zugeordnet sind, die in einer zweiten Luftbildvermessung erfasst werden und nicht bündelangepasst wurden, wobei die berechneten Peilrichtungskalibrierungsparameter entsprechend den jeweiligen Positionen der mindestens einen Bilderfassungskomponente des Bildgebungssystems (12) angewandt werden, wenn die zweiten Bilder in der zweiten Luftbildvermessung erfasst werden.

2. Verfahren nach Anspruch 1, wobei jeder Peilrichtungskalibrierungsparameter ein Kalibrierungsparameter ist, der einer Drehkomponente von Sichtliniendaten zugeordnet ist, beispielsweise einer x-, y- oder z-Rotationskomponente der Sichtliniendaten.

3. Verfahren nach Anspruch 2, wobei die Peilrichtungskalibrierungsparameter als eine Drehmatrix $R_{mat}$ mit x-, y- und z-Drehkomponenten ausgedrückt werden.

4. Verfahren nach einem der Ansprüche 1 bis 3, umfassend das Speichern von Peilrichtungskalibrierungsparametern in einer Nachschlagetabelle, wobei jeder Eintrag in der Nachschlagetabelle mindestens einem Bilderfassungsparameter zugeordnet ist und wobei die Nachschlagetabelle eine mehrdimensionale Nachschlagetabelle ist, die von der Anzahl der Bilderfassungsparameter abhängt.

5. Verfahren nach Anspruch 4, umfassend das Bestimmen mindestens einiger Peilrichtungskalibrierungsparameter in der Nachschlagetabelle durch Interpolation.

6. Verfahren nach einem der Ansprüche 1 bis 3, umfassend das Bestimmen eines Polynoms, das eine Beziehung zwischen einem Peilrichtungskalibrierungsparameter und mindestens einem Bilderfassungsparameter darstellt, und Verwendung des Polynoms, um einen Peilrichtungskalibrierungsparameters unter Verwendung des mindestens einen Bilderfassungsparameters zu berechnen.

7. Verfahren nach einem der Ansprüche 1 bis 6, umfassend das Berechnen der Peilrichtungskalibrierungsparameter am Flugzeug oder das Speichern von nicht kalibrierten Sichtliniendaten am Flugzeug zur anschließenden Übertragung an eine Verarbeitungsanlage, und Berechnen der Peilrichtungskalibrierungsparameter an der Verarbeitungsanlage.

8. Peilrichtungskalibrierungssystem (38) zum Durchführen des Verfahrens nach einem der Ansprüche 1 bis 7.


**Revendications**

1. Un procédé mis en oeuvre par ordinateur de calibrage de données de ligne de visée d'un système d'imagerie (12) disposé sur un aéronef (10), la ligne de visée étant une orientation extérieure pour chaque image capturée par le système d'imagerie, le procédé comprenant :

le calcul de paramètres de calibrage d'axe de pointage (54) pour des images capturées par le système d'imagerie au moyen de :

données d'orientation dérivées d'une unité de mesure inertielle (47),
données de ligne de visée associées à des premières images d'une solution de compensation par faisceaux existante capturées dans un premier relevé aérien,
le procédé étant **caractérisé en ce que**
le système d'imagerie comprend au moins un composant de capture d'images agencé de façon à se déplacer par rapport à l'aéronef au cours d'un relevé aérien,
où le calcul des paramètres de calibrage d'axe de pointage utilise également : au moins un paramètre de capture d'images (50) associé aux premières images, le au moins un paramètre de capture d'images (50) étant indicatif de positions respectives du au moins un composant de capture d'images mobile du système d'imagerie (12) lorsque les premières images sont capturées dans le premier relevé aérien,
où le système d'imagerie est un système d'imagerie à caméra comprenant un ensemble caméra (18) agencé de façon à pivoter autour d'un axe central (19), avec un champ de visée de caméra qui se déplace de manière oscillante transversalement, avec la trajectoire correspondant à la direction de déplacement de l'aéronef,
où le au moins un paramètre de capture d'images (50) comprend une position de rotation de l'ensemble caméra (18), et/ou
une position associée à un composant de compensation de mouvement vers l'avant, lorsque le système d'imagerie à caméra comprend au moins un composant de compensation de mouvement vers l'avant agencé de façon à compenser un flou d'image provoqué par un déplacement vers l'avant du système d'imagerie à caméra, et/ou
une position associée à un composant de compensation de mouvement transversal, lorsque le système d'imagerie à caméra comprend au moins un composant de compensation de mouvement transversal agencé de façon à compenser un flou d'image provoqué par un déplacement transversal,

où le procédé comprend en outre l'application des paramètres de calibrage d'axe de pointage calculés à des données de ligne de visée associées à des deuxièmes images capturées dans un deuxième relevé aérien qui n'ont pas été compensées par faisceaux, les paramètres de calibrage d'axe de pointage calculés étant appliqués en fonction des positions respectives du au moins un composant de capture d'images mobile du système d'imagerie (12) lorsque les deuxièmes images sont capturées dans le deuxième relevé aérien.

**2.** Un procédé selon la Revendication 1, où chaque paramètre de calibrage d'axe de pointage est un paramètre de calibrage associé à un composant de rotation de données de ligne de visée, par exemple un composant de rotation *x, y* ou *z* des données de ligne de visée.

**3.** Un procédé selon la Revendication 2, où les paramètres de calibrage d'axe de pointage sont exprimés sous la forme d'un matrice de rotation $R_{mat}$ possédant des composants de rotation *x, y* et *z*.

**4.** Un procédé selon l'une quelconque des Revendications 1 à 3, comprenant la conservation en mémoire de paramètres de calibrage d'axe de pointage dans une table de consultation, où chaque entrée de la table de consultation est associée à au moins un paramètre de capture d'images et où la table de consultation est une table de consultation multidimensionnelle qui dépend du nombre de paramètres de capture d'images.

**5.** Un procédé selon la Revendication 4, comprenant la détermination d'au moins certains paramètres de calibrage d'axe de pointage dans la table de consultation par interpolation.

**6.** Un procédé selon l'une quelconque des Revendications 1 à 3, comprenant la détermination d'un polynomial représentatif d'une relation entre un paramètre de calibrage d'axe de pointage et au moins un paramètre de capture d'images, et l'utilisation du polynomial pour calculer un paramètre de calibrage d'axe de pointage au moyen du au moins un paramètre de capture d'images.

**7.** Un procédé selon l'une quelconque des Revendications 1 à 6, comprenant le calcul des paramètres de calibrage d'axe de pointage sur l'aéronef ou la conservation en mémoire de données de ligne de visée non calibrées sur l'aéronef pour un transfert subséquent vers un dispositif de traitement, et le calcul des paramètres de calibrage d'axe de pointage au niveau du dispositif de traitement.

**8.** Un système de calibrage d'axe de pointage (38) destiné à l'exécution du procédé selon l'une quelconque des Revendications 1 à 7.

Fig. 1

Fig. 2

Fig. 3

50

Image
capture
parameters

48

Bundle
adjustment
solution

38

INS

IMU 47

45

44

Bundle
adjustment
process

40

Control
unit

42

Memory

52

Boresight
calibration
parameter
calculation
process

46

Ground images

Polynomials 58

Lookup
tables 56

Boresight
calibration
parameters 54

# Fig. 4

60

Carry out
survey & obtain
ground images — 62

↓

Perform bundle adjustment on
obtained images to determine
rotation matrix values for each
obtained image — 64

↓

Use the rotation matrix values for each
image and the current image capture
parameters to calculate $x$, $y$ and $z$ boresight
calibration parameters for each image — 66

↓

Use the calculated $x$, $y$ and $z$ boresight
calibration parameters to compensate
for boresight misalignment in a
subsequent survey — 68

# Fig. 5

70

Create a multi-dimensional lookup table
for each of the *x*, *y* and *z* parameters
using the calculated *x*, *y* and *z* boresight
calibration parameters and the associated
current image capture parameters

72

Interpolate the
values in the lookup
tables to complete
the lookup tables

74

Carry out
survey & obtain
ground images

76

Use the *x*, *y* and *z* lookup tables to determine
*x*, *y* and *z* boresight calibration parameters for
each image to compensate for boresight
misalignment of the image based on the
associated image capture parameters

78

# Fig. 6

```
                                                                  ⟋ 80
                                                               ↙

┌─────────────────────────────────────────────┐
│ Determine a polynomial for each of the x, y   │      ⟋ 82
│ and z parameters that satisfies the respective │
│ calculated x, y or z boresight calibration     │
│ parameter and is dependent on an associated    │
│ image capture parameter                        │
└─────────────────────────────────────────────┘
                        │
                        ▼
          ┌──────────────────────┐
          │ Carry out            │      ⟋ 84
          │ survey & obtain      │
          │ ground images        │
          └──────────────────────┘
                        │
                        ▼
┌─────────────────────────────────────────────┐
│ Use the x, y and z polynomials to determine x, │      ⟋ 86
│ y and z boresight calibration parameters for   │
│ each image to compensate for boresight         │
│ misalignment of the image based on the         │
│ associated image capture parameter             │
└─────────────────────────────────────────────┘
```

# Fig. 7

Fig. 8

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- AU 2015000606 W

- WO 2016054681 A1

**Non-patent literature cited in the description**

- **CHU CHIEN-HSUN et al.** The DG Performance Verifications of UAV Borne MMS Payload with Two Tactical Grade Low Cost MEMS IMUs using new calibration method. *GNSS 2014, Proc. 27th International Technical Meeting of the Satellite Division of the Institute of Navigation,* 2014